# EUROPEAN PATENT APPLICATION

(11) **EP 4 082 629 A1**
(43) Date of publication of application: **02.11.2022**
(21) Application number: 20950018.0
(22) Date of filing: 29.09.2020
(51) Int. Cl.: A62B 35/00, A62B 1/10, F16D 65/02, F16D 43/14

(54) **ROPE LOCKING APPARATUS**

(30) Priority: 18.08.2020 CN 202010833237
(71) Applicant: Ficont Industry (Beijing) Co., Ltd., Beijing 101106 (CN)
(72) Inventor: SONG, Yongqiang, Beijing 101106 (CN); LIU, Zizhao, Beijing 101106 (CN); LIU, Zhixin, Beijing 101106 (CN)
(74) Representative: Geskes, Christoph
(86) International application number: PCT/CN2020/118911
(87) International publication number: WO 2022/036814

(57) **Abstract**

A rope locking apparatus, comprising: a friction wheel pair, which comprises two friction wheels (21) with friction surfaces arranged opposite each other, wherein the friction surfaces of the two friction wheels (21) are used for clamping a rope (100); a centrifugal member adapted to switching between a centrifugal state and a reset state as the rotation speed of the friction wheel pair changes; a main shaft (22), wherein the centrifugal member in the centrifugal state is adapted to reaching a working position to drive the main shaft (22) to rotate, the centrifugal member in the reset state is separated from the main shaft (22), and the two friction wheels (21) are respectively installed at two ends of the main shaft (22); and a locking member (11), which is located between the two friction surfaces and arranged on the main shaft (22), and is adapted to rotating along with the main shaft (22), so that the locking member (11) can switch between a locked state and an unlocked state with the rope (100). In the centrifugal state, the main shaft (22) is adapted to driving the locking member (11) to move to the locked state; and in the reset state, the locking member (11) is in the unlocked state, such that a locking failure can be effectively avoided, the reliability of a falling protection function is guaranteed, and casualties are avoided.

## Description

### CROSS-REFERENCE TO RELATED APPLICATIONS

The present application claims priority to Chinese Patent Application No. 202010833237.3 filed on August 18, 2020, entitled "Rope Locking Apparatus", which is hereby incorporated by reference in its entirety.

### TECHNICAL FIELD

The present application relates to the technical field of safety protection, and in particular to a rope locking apparatus.

### BACKGROUND

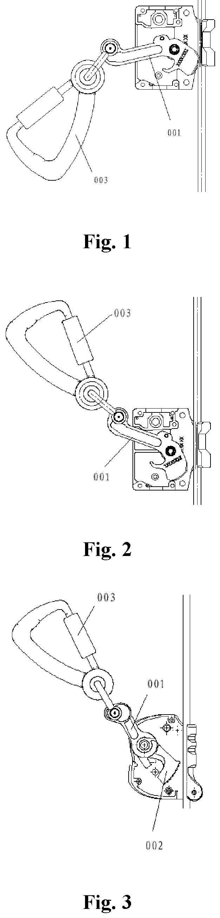

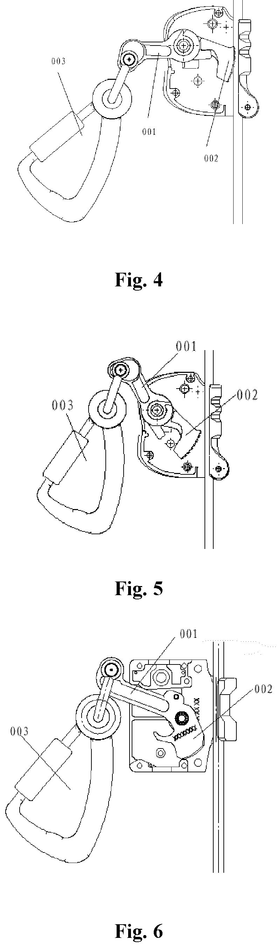

At present, with the development of society, it is very common to work in an aerial climbing environment and perform aerial transportation. In wind power industry, construction industry_and the like, in order to ensure the safety of aerial staff during construction, it is necessary to arrange fall protection equipment with reliable performance. The rope locking apparatus is an important fall protection equipment connecting a rope and a worker in these industries. Through the rope locking apparatus, the worker can walk freely and safely along the length direction of the rope. The structure of the traditional rope locking apparatus can be referred to Fig. 1 to Fig. 4. As shown in Fig. 1 and Fig. 2, when a worker falls, the carabiner 003 pulls the driving lever 001, then the locking surface on the driving lever 001 swings towards the rope until the locking surface and the rope are clamped tightly to realize a locking effect and prevent the worker from continuing to fall. As shown in Fig. 3 and Fig. 4, one end of the driving lever 001 can trigger the locking lever 002, to make the locking lever 002 swing synchronously with the rotation of the driving lever 001. In case of falling accident, the fall of the worker drives the carabiner 003 to move, to make the driving lever 001 rotate and then drive the locking lever 002 and the wire rope to be clamped tightly to realize a locking effect.

In a traditional rope locking apparatus, the driving lever 001 is used as the triggering part of the locking member. In case of falling accident, the worker in a panic may just grab the driving lever 001 subconsciously, to make the rope locking apparatus in a state shown in Fig. 5 or Fig. 6. At this time, the driving lever 001 cannot be rotated, thus the rope locking apparatus cannot be locked in time, and then cannot protect the safety of the worker, thereby causing serious casualties.

### SUMMARY

The present application aims to solve at least one of the problems existing in the related art. The present application provides a rope locking apparatus, which can drive a locking member and a rope to lock when a moving speed of a friction wheel pair relative to the rope reaches a set value, thereby avoiding a protection failure that exists in the traditional art where a locking is triggered by swing lever, and realizing that the protection function can be more secure and reliable.

The rope locking apparatus according to the embodiments of the present application includes:
a friction wheel pair, including two friction wheels with friction surfaces arranged opposite to each other, the friction surfaces of the two friction wheels being used for clamping a rope;
a centrifugal member, adapted to switching between a centrifugal state and a reset state as a change of a rotating speed of the friction wheel pair;
a main shaft, where when the centrifugal member is in the centrifugal state, the centrifugal member is adapted to reaching a working position to drive the main shaft to rotate, when the centrifugal member is in the reset state, the centrifugal member is separated from the main shaft, and the two friction wheels are respectively installed at two ends of the main shaft; and
a locking member, located between the two friction surfaces, arranged on the main shaft and adapted to rotating with the main shaft, to make the locking member switch between a locked state and an unlocked state with the rope;
when the centrifugal member is in the centrifugal state, the main shaft is adapted to driving the locking member to move to the locked state; and when the centrifugal member is in the reset state, the locking member is in the unlocked state.

According to the rope locking apparatus provided by the embodiments of the present application, the centrifugal member can switch between the centrifugal state and the reset state based on the rotating speed of the friction wheel pair. In case of falling accident, the friction wheel pair has a high rotating speed, and at this time, the centrifugal member has a large centrifugal force, and then the centrifugal member switches to the centrifugal state, which drives the main shaft to move, and makes the locking member switch to the locked state under the action of the main shaft, to ensure the operator's safety. The rope locking apparatus can effectively avoid a locking failure caused by external factors and ensure reliability of fall protection function. Lifting equipment with the rope locking apparatus provided by the present application is capable of providing better safety and avoiding casualty.

According to an embodiment of the present application, the rope locking apparatus further includes:
a roller sleeve, corresponding to the friction wheel one-to-one and co-axially arranged with the friction wheel, and adapted to rotating with the friction wheel;
where the centrifugal member is installed in the roller sleeve.

According to an embodiment of the present application, a center of the friction wheel is formed with a mounting hole, and the mounting hole is formed with a first limiting portion; and
the roller sleeve is formed with a second limiting portion, and the first limiting portion matches with the second limiting portion, to allow the roller sleeve to be rotatable with the friction wheel.

According to an embodiment of the present application, the rope locking apparatus further includes:
a roller assembly, corresponding to the friction wheel one-to-one and co-axially arranged with the friction wheel, including a roller body and an end cover arranged at an end of the roller body and rotatable with the roller body; where the roller body is sleeved outside the roller sleeve, and an inner surface of the roller body is formed with a first step surface;
the centrifugal member is a centrifugal flail block installed between the roller sleeve and the roller, and a first end of the centrifugal flail block is hinged to the roller sleeve, a second end of the centrifugal flail block is formed with a second step surface; when the centrifugal member is in the centrifugal state, the first step surface and the second step surface are limiting matched, and when the centrifugal member is in the reset state, the first step surface and the second step surface are separated; and the second end of the centrifugal flail block is connected to an extension spring, when the centrifugal member is in the centrifugal state, the extension spring is in a stretched state, and when the centrifugal member is in the reset state, the extension spring is in a natural state; and
the main shaft is installed at both ends thereof on the end cover and is adapted to rotating with the end cover.

According to an embodiment of the present application, an end of the roller body is formed with a buckle protrusion, and the end cover is formed with a buckle groove matched with the buckle protrusion, to allow the end cover to be rotatable with the roller body.

According to an embodiment of the present application, the rope locking apparatus further includes:
a bearing, including a bearing inner race, the roller being installed in the bearing inner race.

According to an embodiment of the present application, the rope locking apparatus further includes:
a protective housing, including a first housing and a second housing; and
a first compression spring, a first end of which being installed on an inner wall of the first housing, and a second end of which abutting against a rope grip jaw, to allow the rope grip jaw and the friction wheel pair to clamp the rope;
the friction wheel pair is installed between the first housing and the second housing.

According to an embodiment of the present application, a second compression spring is installed between the first housing and one of the friction wheels, and a second compression spring is installed between the second housing and the other of the friction wheels, and the second compression springs are compressed to squeeze the rope toward the friction wheels.

According to an embodiment of the present application, the friction wheel includes a friction wheel plate and friction teeth formed at an outer edge of the friction wheel plate, and a thickness of the friction teeth gradually increases toward a center of the friction wheel plate.

According to an embodiment of the present application, the locking member includes an installing portion sleeved on the main shaft and a friction locking portion connected to the installing portion.

Additional aspects and advantages of the present application will be set forth, in part, from the following description, and in part will be apparent from the following description, or may be learned by practice of the present application.

### BRIEF DESCRIPTION OF THE DRAWINGS

In order to more clearly illustrate the technical solutions according to the embodiments of the present application or the related art, the accompanying drawings needed in the description of the embodiments or the related art will be briefly introduced as follows. It should be noted that the drawings in the following description are part of embodiments of the present application. For those ordinary skilled in the art, other drawings can also be obtained based on these drawings without any creative effort.
Fig. 1 is a schematic view of a rope locking apparatus in the related art in a working state where a driving lever and a rope are clamped tightly.
Fig. 2 is a schematic view of a rope locking apparatus in the related art in a working state where a driving lever and a rope are separated.
Fig. 3 is a schematic view of a rope locking apparatus in the related art in a working state where a locking lever and a rope are separated.
Fig. 4 is a schematic view of a rope locking apparatus in the related art in a working state where a locking lever and a rope are clamped.
Fig. 5 is a schematic view of a rope locking apparatus including a locking lever in the related art in a working state, where the working state is caused by a maloperation in case of falling accident.
Fig. 6 is a schematic view of a rope locking apparatus in the related art in a working state, where the working state is caused by a maloperation in case of falling accident.
Fig. 7 is a schematic view showing an assembly relationship between a rope and a rope locking apparatus provided by an embodiment of the present application.
Fig. 8 is a partial exploded schematic view of a rope locking apparatus provided by an embodiment of the present application.
Fig. 9 is a schematic view showing an assembly relationship between a main shaft and a locking member provided by an embodiment of the present application.
Fig. 10 is a schematic view showing an assembly relationship of a friction wheel pair provided by an embodiment of the present application.
Fig. 11 is a schematic view showing an assembly relationship between a friction wheel, a roller assembly and a main shaft in an embodiment of the present application.
Fig. 12 is a schematic structural view of a rope in contact with a friction surface provided by an embodiment of the present application.
Fig. 13 is an installing schematic view of a first rope locking apparatus provided by an embodiment of the present application.
Fig. 14 is an installing schematic view of a second rope locking apparatus provided by an embodiment of the present application.
Fig. 15 is an installing schematic view of a third rope locking apparatus provided by an embodiment of the present application.
Fig. 16 is an installing schematic view of a fourth rope locking apparatus provided by an embodiment of the present application.

### Reference numerals:

001: driving lever; 002: locking lever; 003: carabiner;
10: swing lever; 11: locking member; 111: sleeving hole; 112: first flat surface; 100: rope;
20: speed measuring assembly; 21: friction wheel; 211: mounting hole; 212: first limiting surface; 213: friction tooth; 22: main shaft; 221: second flat surface; 222: fourth limiting surface; 23: centrifugal flail block; 231: fixing hole; 232: second hinge hole; 24: extension spring; 25: roller sleeve; 251: second limiting surface; 252: first hinge hole; 26: roller body; 261: buckle protrusion ;27: bearing; 28: end cover; 281: buckle groove; 282: through hole; 283: third limiting surface; 29: pin roll;
30: rope grip jaw; 31: base;
40: first housing; 50: second housing;
60: second compression spring;
70: first compression spring.

### DETAILED DESCRIPTION

The implementations of the present application are further described in detail below in conjunction with the accompanying drawings and embodiments. The following embodiments are intended to illustrate the present application, but are not intended to limit the scope of the present application.

In the description of the embodiments of the present application, it should be noted that, the orientation or positional relations indicated by terms such as "center", "longitudinal", "transverse", "upper", "lower", "front", "rear", "left", "right" , "vertical", "horizontal", "top", "bottom", "inner", "outer" and the like are based on the orientation or positional relations shown in the drawings, which are merely convenience of description of the embodiments of the present application and to simplify description, but does not indicate or imply that the stated device or element must have the particular orientation, or be constructed and operated in a particular orientation, and thus it is not to be construed as limiting the embodiments of the present application. Furthermore, the terms "first", "second" and "third" are used for descriptive purposes only and should not be construed as indicating or implying a relative importance.

In the description of the embodiments of the present application, it should be noted that unless explicitly stated and defined otherwise, the terms "connected to" and "connected" shall be understood broadly, for example, it may be either fixedly connected or detachably connected, or can be integrated; it may be either mechanically connected, or electrically connected; it may be either directly connected or indirectly connected through an intermediate medium. The specific meanings of the terms above in the embodiments of the present application can be understood by a person skilled in the art in accordance with specific conditions.

In the embodiments of the present application, unless explicitly stated and defined otherwise, a first feature being "up" or "down" a second feature may mean that the first feature is directly contacted with the second feature, or the first feature and the second feature are indirectly contacted through an intermediate medium. Also, a first feature being "above", "over" and "on" a second feature may mean that the first feature is directly above or obliquely above the second feature, or simply means that a level of the first feature is higher than that of the second feature. A first feature being "below", "under" and "down" a second feature may mean that the first feature is directly below or obliquely below the second feature, or simply means that a level of the first feature is lower than that of the second feature.

In the description of this specification, the reference terms such as "an embodiment," "some embodiments," "example," "specific example," or "some examples", and the like mean that specific feature, structure, material or characteristic described in conjunction with the embodiment or example is included in at least one embodiment or example of the present application. In this description, schematic expressions of the above terms are not necessarily directed to the same embodiment or example. Furthermore, the described specific feature, structure, material or characteristic can be combined in any suitable manner in any one or more embodiments or examples. In addition, those skilled in the art can combine various embodiments or examples and features in various embodiments or examples described in this description unless they are contradictory.

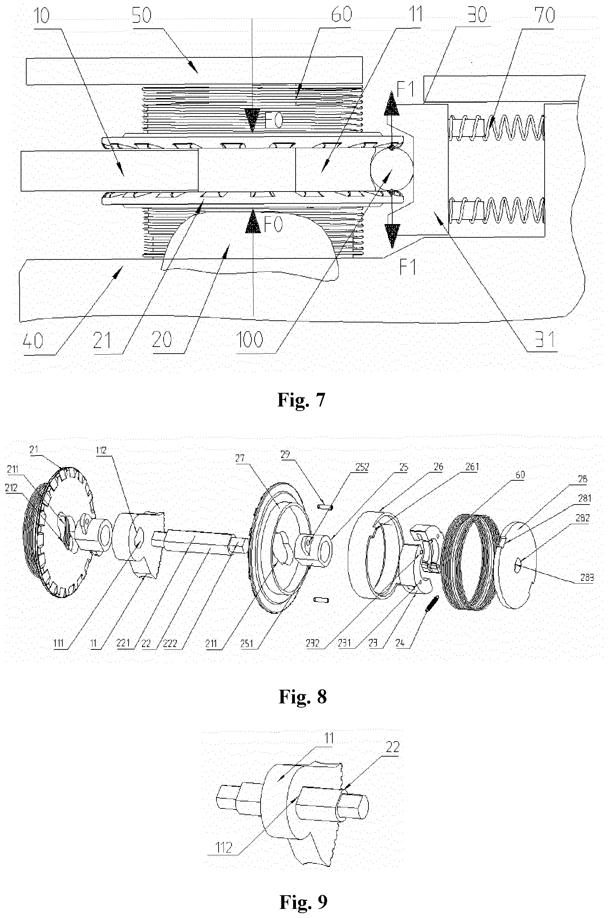

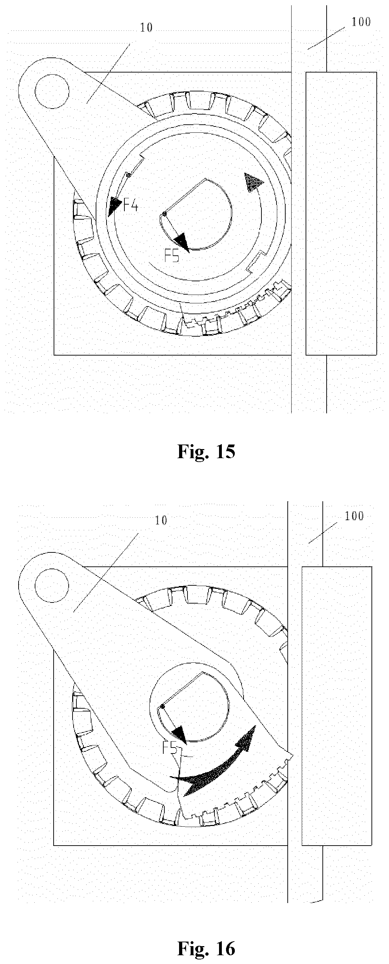

Referring to Fig. 7 to Fig. 16, a rope locking apparatus according to embodiments of the present application includes a friction wheel pair, a centrifugal member, a main shaft 22 and a locking member 11. Where, the friction wheel pair includes two friction wheels 21 with friction surfaces arranged opposite to each other, and the friction surfaces of the two friction wheels 21 are used for clamping a rope 100; the centrifugal member is adapted to switching between a centrifugal state and a reset state as a change of a rotating speed of the friction wheel pair; in the centrifugal state, the centrifugal member is adapted to reaching a working position to drive the main shaft 22 to rotate, and in the reset state, the centrifugal member is separated from the main shaft 22; the locking member 11 is located between the two friction surfaces, and the locking member 11 is arranged on the main shaft 22, and then the locking member 11 can rotate along with the main shaft 22, to make the locking member 11 switch between a locked state and an unlocked state with the rope 100. Where, when the centrifugal member is in the centrifugal state, the main shaft 22 can drive the locking member 11 to move to the locked state; and when the centrifugal member is in the reset state, the locking member 11 is in the unlocked state.

According to the rope locking apparatus provided by the embodiments of the present application, the centrifugal member can switch between the centrifugal state and the reset state based on the rotating speed of the friction wheel pair. In case of falling accident, the friction wheel pair has a high rotating speed, and at this time, the centrifugal member has a large centrifugal force, and then the centrifugal member switches to the centrifugal state. The centrifugal member in the centrifugal state can drive the main shaft 22 to move when it reaches the working position, and make the locking member 11 switch to the locked state under the action of the main shaft 22, to ensure the operator's safety. The rope locking apparatus can effectively avoid a locking failure caused by external factors and ensure reliability of fall protection function. Lifting equipment with the rope locking apparatus provided by the present application is capable of providing better safety and avoiding casualty.

According to the embodiments of the present application, the rotating speed of the friction wheel pair may reflect the current falling speed. When the falling speed is excessive and reaches a set speed, the friction wheel pair will drive the centrifugal member to switch to the centrifugal state, to realize the locking of the locking member 11 and the rope 100. For example, when the rope locking apparatus is installed between the rope 100 and the operator, once the operator falls accidentally, the operator in accelerated falling will drive the friction wheel pair to rotate in an accelerated manner relative to the rope 100 until the friction wheel pair reached a set speed. At this time, the centrifugal member drives the main shaft 22 to rotate, and the main shaft 22 drives the locking member 11 to lock, then the operator can be prevented from continuing to fall. Where, when the rope locking apparatus is installed between the rope 100 and the operator, the rope locking apparatus includes a carabiner 003 which is used for connecting the rope locking apparatus and the operator. In addition, the rope locking apparatus can also be installed between the rope 100 and an elevator or other lifting equipment.

According to the embodiment of the present application, "a locked state with the rope 100" refers to that the locking member 11 is locked on the rope 100, and then the relative resistance to motion between the locking member 11 and the rope 100 is so large that even the relative movement is impossible; and "an unlocked state with the rope 100" refers to that there is almost no resistance or very small resistance during the relative movement between the locking member 11 and the rope 100.

According to the embodiments of the present application, "when the centrifugal member is in the centrifugal state, the main shaft 22 can drive the locking member 11 to move to the locked state" refers to that the centrifugal member in the centrifugal state can move to the working position, and then the centrifugal member reached the working station can drive the main shaft 22 to move, without requiring that the centrifugal member must be able to drive the main shaft 22 to move as long as the centrifugal member is in the centrifugal state. For example, a critical value of centrifugal force can be set for the centrifugal member, and when the centrifugal member is in a critical state while the centrifugal force has not yet reached the critical value, power transmission may not be performed between the centrifugal member and the main shaft 22.

Referring to Fig. 8, the rope locking apparatus according to the embodiments of the present application includes a roller sleeve 25. Where, the roller sleeve 25 and the friction wheel 21 correspond to each other in an one-to-one manner and the roller sleeve 25 is co-axially arranged with the friction wheel 21, and the roller sleeve 25 is adapted to rotating with the friction wheel 21. For example, when the number of friction wheels 21 is two, the number of roller sleeves 25 is also two, and the roller sleeves 25 rotate synchronously with the friction wheels 21. On this basis, when the centrifugal member is installed in the roller sleeve 25, the friction wheel 21 can drive the centrifugal member to rotate through the roller sleeve 25, to make the centrifugal member switch to the centrifugal state when the rotating speed reaches the set value.

In an embodiment, in order to enable the friction wheel 21 to drive the roller sleeve 25 to rotate, a center of the friction wheel 21 is formed with a mounting hole 211, and the mounting hole 211 is formed with a first limiting portion; the roller sleeve 25 is formed with a second limiting portion, and the first limiting portion and the second limiting portion match with each other, to allow the roller sleeve 25 to be rotatable with the friction wheel 21. For example, the first limiting portion can be a first limiting surface 212 formed on a side wall of the mounting hole 211, and the second limiting portion can be a second limiting surface 251 formed on an outer surface of the roller sleeve 25. In order to ensure that the inner surface of the mounting hole 211 and the outer surface of the roller sleeve 25 are uniformly stressed, multiple first limiting surfaces 212 and multiple second limiting surfaces 251 which correspond to each other in an one-to-one manner can be provided. Where, when both the number of the first limiting surfaces 212 and the number of the second limiting surfaces 251 are multiple, the multiple first limiting surfaces 212 are uniformly arranged along the circumferential direction of the mounting hole 211. Similarly, the second limiting surfaces 251 are uniformly arranged along the outer surface of the roller sleeve 25.

In order to ensure that the roller sleeve 25 is rotatable with the friction wheel 21, in addition to providing the first limiting portions and second limiting portions matched with each other in structure, the roller sleeve 25 and the friction wheel 21 can also be integrally formed, or the roller sleeve 25 and the friction wheel 21 can be fixed together by welding or screw connection. Where, when the friction wheel 21 and the roller sleeve 25 match with each other by the first limiting portions and the second limiting portions, they can be easily disassembled and assembled.

The roller sleeve 25 may be not necessary. For example, the centrifugal member can be directly installed on the friction wheel 21, then the centrifugal member can be driven to rotate as the friction wheel 21 rotates. As an illustration, the centrifugal member can be hinged to the friction wheel 21, then the centrifugal member can switch to the centrifugal state under the centrifugal force of the friction wheel 21.

According to an embodiment of the present application, the rope locking apparatus further includes a roller assembly. Where, the roller assembly and the friction wheel 21 correspond to each other in a one-to-one manner and the roller assembly is co-axially arranged with the friction wheel 21, for example, when there are two friction wheels 21, there are also two roller assemblies. The roller assembly includes a roller body 26 and an end cover 28 arranged at an end of the roller body 26 and rotatable with the roller body 26; and the roller body 26 is sleeved outside the roller sleeve 25, and the main shaft 22 is installed on the end cover 28 and is adapted to rotating with the end cover 28.

In this case, the centrifugal member transmits motion to the end cover 28 by the roller body 26, and transmits motion to the main shaft 22 by the end cover 28. That is, the roller body 26 is driven to rotate when the centrifugal member is in the centrifugal state, and then the end cover 28 is driven to rotate. The centrifugal member is abutted against the outer surface of the roller sleeve 25 when the centrifugal member is in the reset state.

In an embodiment, the roller assembly is located at an outer side of the friction wheel 21. The outer side of the friction wheel 21 refers to a side facing away from the other friction wheel 21. In conjunction with Fig. 8, the outer side of the friction wheel 21 on left refers to a left side thereof, and the outer side of the friction wheel 21 on right refers to a right side thereof. In this case, the space between the two friction wheels 21 is more compact, thereby facilitating the two friction surfaces to clamp the rope 100, and ensuring that when the rope locking apparatus moves up and down along the rope 100, the friction wheel 21 rolls relative to the rope 100, to avoid a slippage. In addition, the roller assembly can be arranged on an inner side of the friction wheel 21.

In an embodiment, an inner surface of the roller body 26 is provided with a first step surface; and the centrifugal member is a centrifugal flail block 23, and a surface of the centrifugal flail block 23 facing the roller body 26 is formed with a second step surface. Specifically, the centrifugal flail block 23 is installed between the roller sleeve 25 and the roller 26, a first end of the centrifugal flail block 23 is hinged to the roller sleeve 25, and a second end of the centrifugal flail block 23 is formed with the second step surface. When the centrifugal member is in the centrifugal state, the first step surface and the second step surface are limiting matched, to allow the centrifugal flail block 23 to drive the roller body 26 to rotate. When the centrifugal member is in the reset state, the first step surface and the second step surface are separated, and then the roller 26 hardly rotates, thus the end cover 28 and even the main shaft 22 hardly rotate, to keep the locking member 11 in the unlocked state. However, the structure of the centrifugal member is not limited by the examples mentioned above. For example, the centrifugal member can be a centrifugal lever, and when the rotating speed of the roller sleeve 25 reaches the set speed, a limiting matching is formed between the centrifugal lever and the roller 26, then the roller sleeve 25 drives the roller 26 to rotate by the centrifugal member; the centrifugal member can be in other structures. In addition, the matching between the first step surface and the second step surface can ensure the structural strength of the position of the limiting matching and it should be noted that the manner of the limiting matching is not limited to the matching of the step surfaces.

In an embodiment, as shown in Fig. 8, the number of the centrifugal flail block 23 is two, and the two centrifugal flail blocks 23 are arranged along a circumferential direction of the roller sleeve 25; where a second end of each centrifugal flail block 23 is connected to a hinge position of a first end of the other centrifugal flail block 23 by means of an extension spring 24. The arrangement of the extension spring 24 ensures that the centrifugal flail block 23 can be automatically reset, which guarantees that the rope locking apparatus can normally move up and down along the rope 100 under normal circumstances, and the locking member 11 and the rope 100 are driven to lock only when the speed of the rope locking apparatus exceeds a normal speed. Specifically, the second end of the centrifugal flail block 23 moves toward a direction away from the roller sleeve 25 under the action of centrifugal force, and at this point, the extension spring 24 is stretched. As the speed of the roller sleeve 25 is reduced, once the restoring force of the extension spring 24 is greater than the centrifugal force of the second end of the centrifugal flail block 23, the second end of the centrifugal flail block 23 will move toward a direction proximal to the roller sleeve 25 under the action of restoring force of the extension spring 24, then a motion cannot be transmitted between the centrifugal flail block 23 and the inner surface of the roller 26.

In an embodiment, the two centrifugal flail blocks 23 enclose the outer side of the roller sleeve 25, and the forces on the two centrifugal flail blocks 23 are basically equal, and when the centrifugal flail blocks 23 drive the roller 26 to rotate, it can be ensured that the roller 26 is stressed in balance. However, the number of centrifugal flail blocks 23 is not limited by the examples here. For example, in order to enlarge the stressed area between the centrifugal member and the roller 26, the number of centrifugal flail blocks 23 can be increased.

Where, "the second end of the centrifugal flail block 23" is only a relative description to "the first end of the centrifugal flail block 23". In Fig. 8, for example, an area where the centrifugal flail block 23 and the roller sleeve 25 are hinged is the first end of the centrifugal flail block 23, and then an area located downstream of the first end of the centrifugal flail block 23 in the counterclockwise direction can be defined as the second end of the centrifugal flail block 23. For example, in Fig. 8, the second step surface is formed at a middle position of the centrifugal flail block 23, and the middle position can be defined as the second end of the centrifugal flail block 23.

Referring to Fig. 8, the number of the centrifugal flail blocks 23 is two, the roller sleeve 25 is formed with two bosses arranged symmetrically, and each of the first ends of the two centrifugal flail blocks 23 is hinged to one boss by means of a pin roll 29. The arrangement of the bosses facilitates the installation of the centrifugal flail block 23.

In an embodiment, the inner surface of the centrifugal flail block 23 is formed with an arc-shaped mounting groove, then the boss can be at least partially embedded in the arc-shaped mounting groove, and it can be ensured that the centrifugal flail block 23 and the boss do not interfere with each other. On this basis, a first hinge hole 252 on the boss corresponds to a second hinge hole 232 on the centrifugal flail block 23, thus the pin roll 29 can run through the second hinge hole 232 and the first hinge hole 252 in sequence. In addition, a first end of the extension spring 24 is installed on the pin roll 29, a second end of the extension spring 24 runs through a piercing hole of the other centrifugal flail block 23, and is fixed by a fixing shaft running through the fixing hole 231. In this case, the disassembly and assembly of the extension spring 24 is convenient. In addition, the piercing hole and the fixing shaft are not necessary components to achieve the installation of the extension spring 24, and other manners can also be used to realize the fixing between the extension spring 24 and the centrifugal flail block 23.

In an embodiment, the roller body 26 and the end cover 28 are buckled with each other. For example, an end of the roller body 26 facing the end cover 28 is formed with a buckle protrusion 261, and the end cover 28 is formed with a buckle groove 281. Alternatively, the positions of the buckle protrusion 261 and the buckle groove 281 can also be interchanged, namely, the end of the roller body 26 is formed with a buckle groove 281, and the end cover 28 is formed with a buckle protrusion 261. In addition, the roller body 26 and the end cover 28 can also be integrally formed to ensure that the roller body 26 can drive the end cover 28 to rotate, or a motion can be transmitted between the roller body 26 and the end cover 28 by other limiting portions matched with each other.

In an embodiment, the end cover 28 is provided with a through hole 282, and the main shaft 22 is installed in the through hole 282. Where, the through hole 282 can be a non-circular hole, namely, the through hole 282 on the end cover 28 for installing the main shaft 22 is formed with a third limiting surface 283; the main shaft 22 includes a non-circular segment which is formed with a fourth limiting surface 222, and the structures of the third limiting surface 283 and the fourth limiting surface 222 are matched with each other, and then through the matching between the non-circular hole and the non-circular segment, it can be ensured that the main shaft 22 rotates as the end cover 28 rotates. In this case, the disassembly and assembly between the end cover 28 and the main shaft 22 is convenient. In addition, in order to enable the end cover 28 to drive the main shaft 22 to rotate, the end cover 28 and the main shaft 22 can also be fixed by means of a screw connection or other connection.

According to the embodiments of the present application, the rope locking apparatus includes a speed measuring assembly 20, where the speed measuring assembly 20 includes a friction wheel pair, a roller sleeve 25, a centrifugal flail block 23, a roller assembly, a main shaft 22 and other components.

In an embodiment, the rope locking apparatus further includes a bearing 27, the bearing 27 includes a bearing inner race, and the roller 26 is installed in the bearing inner race.

In an embodiment, the rope locking apparatus further includes a protective housing, a first compression spring 70 and a rope grip jaw 30. The protective housing includes a first housing 40 and a second housing 50; a first end of the first compression spring 70 is installed on the inner wall of the first housing 40, and a second end of the first compression spring 70 abuts against the rope grip jaw 30, then the rope grip jaw 30 and the friction wheel pair can clamp the rope 100 tightly; and the friction wheel pair is installed between the first housing 40 and the second housing 50. Based on the rope locking apparatus provided by the embodiments of the present application, since the protective housing includes the first housing 40 and the second housing 50, the components such as the friction wheel pair, the centrifugal member, the main shaft 22, the roller sleeve 25, and the roller 26 can be easily installed into the protective housing. In addition, since the second end of the first compression spring 70 abuts against the rope grip jaw 30, the rope grip jaw 30 can exert a force onto the rope 100, then the rope 100 is clamped between the two friction wheels 21, which ensures that the friction surfaces of the friction wheels 21 are in full contact with the rope 100.

In an embodiment, the rope grip jaw 30 includes a base 31, and the rope 100 is installed between the base 31 and the friction wheel pair.

In an embodiment, referring to Fig. 7, a second compression spring 60 is installed between the first housing 40 and one of the friction wheels 21, and a second compression spring 60 is installed between the second housing 50 and the other of the friction wheels 21. The second compression springs 60 are compressed to squeeze the rope 100 toward the friction wheels 21. With the arrangement of the second compression springs 60, it can be ensured that the friction surfaces of the two friction wheels 21 are in full contact with the rope 100, thereby providing sufficient friction force between the friction wheels 21 and the rope 100.

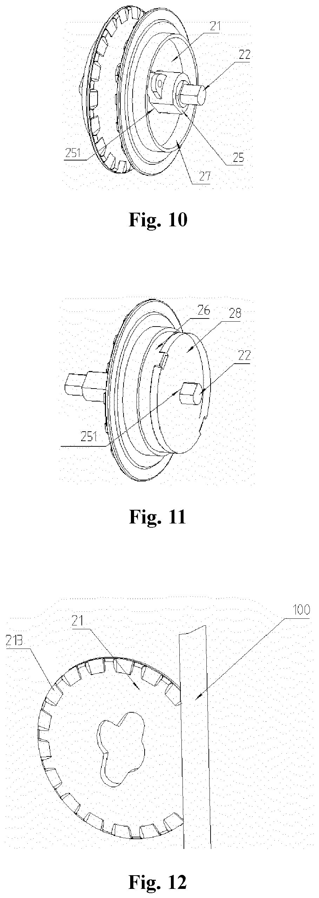

In an embodiment, as shown in Fig. 7 and Fig. 8, the friction wheel 21 includes a friction wheel plate and friction teeth 213 formed at an outer edge of the friction wheel plate, such as the friction teeth 213 shown in Fig. 12, and the thickness of the friction teeth 213 gradually increases toward a center of the friction wheel plate. For example, when the rope 100 is subjected to the force from the rope grip jaw 30 and moves to a position between the two friction surfaces, the closer the rope 100 is to the center of the friction wheel 21, the smaller the distance between the two friction teeth 213, and then the greater the clamping force on the rope 100, thus the greater the friction force between the rope 100 and the friction wheels 21. Where, the number of the friction teeth 213 is multiple and the friction teeth 213 are uniformly distributed along the circumferential direction of the friction wheels 21 to ensure that the friction force of the friction wheels 21 subjected to the rope 100 is stable. The number, distribution and structure of the friction teeth 213 are not limited by the examples mentioned above. In addition, the friction teeth 213 may be not necessary, for example, the friction surfaces of the friction wheels 21 may be frosted surfaces to ensure the friction force.

In an embodiment, the locking member 11 is a locking lever, including an installing portion sleeved on the main shaft 22 and a friction locking portion connected to the installing portion. The installing portion is formed with a sleeving space 111, and an inner surface of the sleeving space 111 is formed with a first flat surface 112, then the installation portion is matched with a second flat surface 221 on the main shaft 22 when it is sleeved on the main shaft 22, to ensure that the main shaft 22 can drive the locking lever to rotate. However, the structural form of the locking member 11 is not limited by the examples mentioned above, as long as it can be used to achieve a locking with the rope 100.

Since the locking member 11 is located between the two friction wheels 21, and the key components of the rope locking apparatus, such as the friction wheels 21, the roller sleeve 25, the roller assembly, the locking member 11, and the main shaft 22, are almost all rotatable around the same axis, a space occupied by the rope locking apparatus is very small. In addition, the rope locking apparatus provided by the embodiments of the present application has a compact structure and reliable motion transmission, which can ensure the safety of use to the greatest extent.

In an embodiment, the rope locking apparatus further includes a swing lever 10, one end of the which is located in the protective housing, the other end thereof protrudes from the protective housing, and the swing lever 10 is adapted to switching between a first position where the locking member 11 is driven to lock the rope 100 and a second position where separating from the locking member 11. It is ensured that the rope locking apparatus has a manual locking function through the arrangement of the swing lever 10, thus the rope locking apparatus has a double-protection function. In general, as long as the swing lever 10 is manually swung, the locking member 11 can be driven to move to a locked state, then the friction wheel pair of the rope locking apparatus cannot roll relative to the rope 100. Under special circumstances, even if the operator operates the swing lever 10 incorrectly in a panic, since the friction wheel pair itself is equivalent to having a speed measuring function, once a speed of the friction wheel pair exceeds the set speed when moving, the centrifugal member controls the locking member 11 to move to the locked state by the main shaft 22, thus ensuring the reliability of locking.

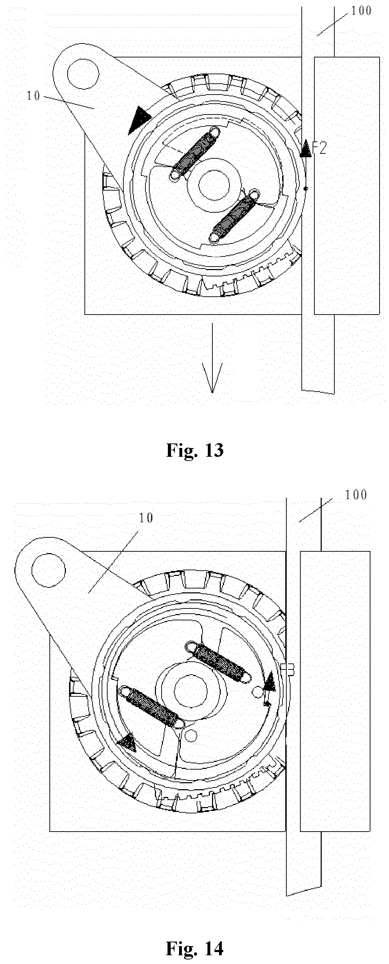

Referring to Fig. 7, the second compression springs 60 exert pressures F0 to the friction wheels 21, then the two friction wheels 21 apply a clamping force F1 to the rope 100. Further, referring to Fig. 13 to Fig. 16, when the rope locking apparatus rotates along the rope 100, the friction wheels 21 move relative to the rope 100 in the direction of the downward arrow in Fig. 13, and the rope 100 is subjected to a friction force F2, then the friction wheels 21 rotate counterclockwise along the counterclockwise arrow in Fig. 13; since the cooperation between the mounting holes 211 on the friction wheels 21 and the roller sleeve 25, the friction wheels 21 can drive the roller sleeve 25 to do a counterclockwise circular motion. Under the action of centrifugal force, the centrifugal flail blocks 23 hinged to the roller sleeve 25 through the bosses move around the roller sleeve 25, until a limiting matching is formed between the first step surface of the roller body 26 and the second step surfaces of the centrifugal flail blocks 23, at this point, the centrifugal flail blocks 23 exert a force F3 on the roller body 26. Further, since the roller body 26 and the end cover 28 are matched by the buckle projections 261 and the buckle grooves 281, the roller body 26 exerts a force F4 on the end cover 28 at the buckle protrusion 261 to ensure that the end cover 28 rotates together with the roller body 26. Since the end cover 28 and the main shaft 22 are matched by non-circular holes and non-circular segments, a force F5 is generated at the position where the non-circular holes and non-circular segments contact, to ensure that the main shaft 22 rotates with the end cover 28 until the locking member 11 and the rope 100 are clamped to realize the locking function of the rope locking apparatus.

The above embodiments are only used to illustrate the solutions of the present application, but not to limit it. Although the present application has been described in detail with reference to the embodiments, those of ordinary skill in the art should understand that various combinations, modifications or equivalent replacements made to the solutions of the present application do not depart from the scope of the solutions of the present application, and should be covered by the scope of the claims of the present application.

## Claims

1. A rope locking apparatus, comprising:
a friction wheel pair, comprising two friction wheels (21) with friction surfaces arranged opposite to each other, the friction surfaces of the two friction wheels (21) being used for clamping a rope (100);
a centrifugal member, adapted to switching between a centrifugal state and a reset state as a change of a rotating speed of the friction wheel pair;
a main shaft (22), wherein when the centrifugal member is in the centrifugal state, the centrifugal member is adapted to reaching a working position to drive the main shaft (22) to rotate, when the centrifugal member is in the reset state, the centrifugal member is separated from the main shaft (22), and the two friction wheels (21) are respectively installed at two ends of the main shaft (22); and
a locking member (11), located between the two friction surfaces, arranged on the main shaft (22) and adapted to rotating with the main shaft (22), to make the locking member (11) switch between a locked state and an unlocked state with the rope (100);
wherein when the centrifugal member is in the centrifugal state, the main shaft (22) is adapted to driving the locking member (11) to move to the locked state; and when the centrifugal member is in the reset state, the locking member (11) is in the unlocked state.

2. The rope locking apparatus according to claim 1, further comprising:
a roller sleeve (25), corresponding to the friction wheel (21) one-to-one and co-axially arranged with the friction wheel (21), and adapted to rotating with the friction wheel (21);
wherein the centrifugal member is installed in the roller sleeve (25).

3. The rope locking apparatus according to claim 2, wherein a center of the friction wheel (21) is formed with a mounting hole (211), and the mounting hole (211) is formed with a first limiting portion; and
the roller sleeve (25) is formed with a second limiting portion, and the first limiting portion matches with the second limiting portion, to allow the roller sleeve (25) to be rotatable with the friction wheel (21).

4. The rope locking apparatus according to claim 2, further comprising:
a roller assembly, corresponding to the friction wheel (21) one-to-one and co-axially arranged with the friction wheel (21), comprising a roller body and an end cover (28) arranged at an end of the roller body and rotatable with the roller body; wherein the roller body is sleeved outside the roller sleeve (25), and an inner surface of the roller body is formed with a first step surface;
wherein the centrifugal member is a centrifugal flail block (23) installed between the roller sleeve (25) and the roller (26), and a first end of the centrifugal flail block (23) is hinged to the roller sleeve (25), a second end of the centrifugal flail block (23) is formed with a second step surface; when the centrifugal member is in the centrifugal state, the first step surface and the second step surface are limiting matched, and when the centrifugal member is in the reset state, the first step surface and the second step surface are separated; and the second end of the centrifugal flail block (23) is connected to an extension spring (24), the extension spring (24) is in a stretched state when the centrifugal member is in the centrifugal state, and the extension spring (24) is in a natural state when the centrifugal member is in the reset state; and
both ends of the main shaft (22) are installed on the end cover (28) and are adapted to rotating with the end cover (28).

5. The rope locking apparatus according to claim 4, wherein an end of the roller body is formed with a buckle protrusion (261), and the end cover (28) is formed with a buckle groove (281) matched with the buckle protrusion (261), to allow the end cover (28) to be rotatable with the roller body.

6. The rope locking apparatus according to any one of claims 1 to 5, further comprising:
a bearing (27), comprising a bearing inner race, the roller (26) being installed in the bearing inner race.

7. The rope locking apparatus according to any one of claims 1 to 5, further comprising:
a protective housing, comprising a first housing (40) and a second housing (50); and
a first compression spring (70), a first end of which being installed on an inner wall of the first housing (40), and a second end of which abutting against a rope grip jaw (30), to allow the rope grip jaw (30) and the friction wheel pair to clamp the rope (100);
wherein the friction wheel pair is installed between the first housing (40) and the second housing (50).

8. The rope locking apparatus according to claim 7, wherein a second compression spring (60) is installed between the first housing (40) and one of the friction wheels (21), and a second compression spring (60) is installed between the second housing (50) and the other of the friction wheels (21), and the second compression springs (60) are compressed to squeeze the rope (100) toward the friction wheels (21).

9. The rope locking apparatus according to any one of claims 1 to 5, wherein the friction wheel (21) includes a friction wheel plate and friction teeth (21) formed at an outer edge of the friction wheel plate, and a thickness of the friction teeth (213) gradually increases toward a center of the friction wheel plate.

10. The rope locking apparatus according to any one of claims 1 to 5, wherein the locking member (11) comprises an installing portion sleeved on the main shaft (22) and a friction locking portion connected to the installing portion.
